# EUROPÄISCHE PATENTSCHRIFT

(11) **EP 1 786 189 B1**
(45) Veröffentlichungstag und Bekanntmachung des Hinweises auf die Patenterteilung: **24.02.2016**
(21) Anmeldenummer: 06018512.1
(22) Anmeldetag: 05.09.2006
(51) Int. Cl.: H04M 3/54

(54) **Umleitungsrufnummerprüfung bei Aktivierung der Anrufumleitung**
Validation of forwarded to number on activation of call forwarding
Validation d'un numéro d'acheminement sur activation de la fonction renvoi automatique

(30) Priorität: 11.11.2005 DE 102005054264
(43) Veröffentlichungstag der Anmeldung: 16.05.2007
(73) Patentinhaber: DB Netz AG, 60468 Frankfurt am Main (DE)
(72) Erfinder: Adami, Jörg, 63762 Grossostheim-Pflaumheim (DE)
(74) Vertreter: Zinken-Sommer, Rainer

(56) Entgegenhaltungen:
- WO-A-01/20885
- WO-A-97/50237
- DE-A1- 10 149 720

## Beschreibung

Die Erfindung betrifft ein Verfahren zur Umleitung eines für ein erstes Telekommunikationsendgerät eingehenden Rufes an ein zweites Telekommunikationsendgerät, welches über eine Vermittlungsstelle mit dem ersten Telekommunikationsendgerät verbindbar ist, wobei beim Aktivieren der Rufumleitungsfunktionalität am ersten Telekommunikationsendgerät eine Nachricht zur Überprüfung der Verfügbarkeit des als Umleitungsziel identifizierten zweiten Telekommunikationsendgerätes von diesem ersten Telekommunikationsendgerät ausgesendet wird.

In nahezu sämtlichen Telekommunikationsnetzen ist es üblich, dass im Falle des Vorliegens bestimmter definierter Bedingungen bei einem angewählten Zielanschluss (z.B. Anschluss ist besetzt, am Anschluss erfolgt innerhalb einer definierten Zeitspanne keine Rufannahme, Zielanschluss ist ohne Empfang etc...) ankommende Rufe auf einen definierten Ausweichanschluss umgelenkt werden. Diese Funktionalität ist allgemein unter dem Begriff Anrufweiterschaltung oder Anrufumlenkung bzw. Anrufumleitung bekannt. Die Anrufumleitung kann am Zielanschluss auch manuell durch einen Bediener aktiviert werden, der in seiner Auswahl eines Ausweichanschlusses als Ziel der Anrufumleitung in der Regel keinen technischen Restriktionen unterliegt.

Allen aus dem Stand der Technik bekannten Ausführungsformen ist es gemeinsam, dass die Auswahl eines Ausweichanschlusses als Ziel der Anrufumleitung in der Regel keinen Restriktionen unterliegt. Es kommt deshalb in der Praxis immer wieder vor, dass ein bei einem ersten Zielanschluss eingehender Ruf auf einen zweiten Ausweichanschluss umgeleitet wird, bei dem wiederum eine Anrufweiterschaltung auf den ursprünglichen ersten Zielanschluss aktiviert ist. Auch die in DE 101 49 720 vorgeschlagene Lösung, wonach eine Rufumleitung erst dann zustande kommt, nachdem eine Gesprächsverbindung zwischen den beteiligten Endgeräten aufgebaut wurde und eine Abstimmung zwischen den beiden Gesprächsteilnehmern erfolgt ist, kann diese Problematik nicht zuverlässig lösen. Abgesehen von der erforderlichen Mitwirkung des gerufenen Teilnehmers und den damit jeglicher menschlichen Kommunikation inne wohnenden Quellen für Fehler und Missverständnisse, ist eine separate Eingabe einer Rufumleitungsbedingung sowie deren Verarbeitung bzw. Speicherung in der Vermittlungsanlage erforderlich.

Aus der WO 97/50237 ist ein Verfahren zur Überprüfung der Gültigkeit einer Zielrufnummer für Zwecke der Umleitung eines an das Endgerät eines Mobilfunknetzes gerichteten Rufes bekannt, bei dem mittels einer Kommunikationsverbindung zwischen der MSC/HLR des Endgerätes eines Mobilfunknetzes und einer die Zielrufnummer bedienenden Ortsvermittlungsstelle ("local exchange") die Gültigkeit der Zielrufnummer überprüft wird. Dies geschieht entweder durch den Aufbau einer durchgehenden Sprachverbindung zwischen dem Mobilfunkendgerät und dem der Zielrufnummer zugeordneten Teilnehmer, mittels der die beiden Teilnehmer in freier verbaler Kommunikation die Korrektheit bzw. Gültigkeit der Zielrufnummer als Umleitungsziel für auf dem Mobilfunkendgerät eingehende und umzuleitende Rufe überprüfen. Die hiermit verbundenen Nachteile stellen sich analog zu den o.g. Nachteilen der DE 101 49 720 dar. Alternativ zu dieser verbalen Kommunikation sieht die WO 97/50237 das Aussenden eines Anwendungssignals (sog. "TCAP-Message") über eine verbindungslose Kommunikation von der MSC an die Ortsvermittlungsstelle vor. Eine solchermaßen angesprochene Ortsvermittlungsstelle ermittelt aus dieser TCAP-Message mittels numerischer Analyse, ob die Zielrufnummer eine gültige Rufnummer ihres Zuständigkeitsbereiches darstellt. Falls dies zutrifft, so gibt die Ortsvermittlungsstelle eine positive Rückmeldung an die MSC zurück, welche dann ihrerseits eine Aktualisierung des HLR (= Home Location Register) sowie das Aussenden einer Benachrichtigung über die erfolgte Aktivierung der Rufumleitung an das Mobilfunkendgerät veranlasst. Dieser Lösungsansatz hat jedoch den Nachteil, dass die von der MSC ausgesendete TCAP-Message bei einem auf dem Weg zur Ortsvermittlungsstelle ggf. vorhandenen Netzübergang abgeschnitten und damit verloren gehen kann; zum anderen kann die Ortsvermittlungsstelle nur die prinzipielle Verfügbarkeit der Zielrufnummer überprüfen. Die Ortsvermittlungsstelle kann jedoch nicht erkennen, ob seitens der Zielrufnummer eine weitere Rufumleitung eingerichtet ist. Dies könnte im ungünstigsten Fall zu einem Ringschluss auf die Rufnummer des umzuleitenden mobilen Endgerätes führen. Zusätzlich kann über den verbindungslosen Dienst eine Verkettung von mehreren Rufumleitungen nicht gesichert abgeprüft werden.

Der Erfindung liegt daher die Aufgabe zugrunde, ein Verfahren zur Umleitung eines für ein erstes Telekommunikationsendgerät eingehenden Rufes an ein zweites Telekommunikationsendgerät, welches über eine Vermittlungsstelle mit dem ersten Telekommunikationsendgerät verbindbar ist, bereitzustellen, welches derartige Rufumleitungs-Ringschlüsse wirksam vermeiden soll. Des weiteren soll das Verfahren so ausgelegt sein, dass eine Anrufumleitung auf ein aus anderweitigen Gründen nicht-verfügbares Rufumleitungsziel (z.B. das Endgerät ist defekt oder der dem Rufumleitungsziel zugeordnete Teilnehmer möchte keine umgeleiteten Anrufe entgegennehmen etc...) unterbleibt und somit auch keine Situationen entstehen können, in denen ein eingehender Anruf in einer "toten Sackgasse" endet.

Erfindungsgemäss wird diese Aufgabe in Verbindung mit dem Oberbegriff des Patentanspruches 1 dadurch gelöst, dass
▪ die Nachricht zur Überprüfung der Verfügbarkeit direkt an das zweite Telekommunikationsendgerät gesendet wird, sowie
▪ der zur Übertragung der Nachricht vom ersten zum zweiten Telekommunikationsendgerät genutzte Signalisierungskanal vom ersten Telekommunikationsendgerät auf eine innerhalb einer vorwählbaren Zeitspanne vom zweiten Telekommunikationsendgerät generierte Rückantwort überprüft wird.

Es kann sich bei dieser vom ersten an das zweite Endgerät übertragenen Nachricht um ein explizites Signal handeln, welches zum Überprüfen auf das Bestehen eines Ringschlusses ausgesendet wird. Eine sinnvolle Ausgestaltung des erfindungsgemässen Gedankens sieht jedoch vor, dass vom ersten Telekommunikationsendgerät eine Rufaufbaunachricht an das als Umleitungsziel identifizierte zweite Telekommunikationsendgerät gesendet wird. Das Signal zum Überprüfen auf einen bestehenden Ringschluss kann somit implizit in eine für eine erfolgreiche Anrufumleitung ohnehin notwendige Verbindungsaufbaunachricht integriert werden. Dies kann beispielsweise durch Verändern eines Protokollelementes geschehen, sobald ein beim ersten Endgerät ankommender Ruf an ein zweites als Weiterleitungsziel fungierendes Endgerät weitergeleitet wird.

Es kann sich bei der vom zweiten Endgeräten generierten Rückantwort ferner um eine eigenständige und normierte Antwort handeln. Durch Senden beispielsweise einer CONNECT-Nachricht kann durch das zweite Endgerät die Annahme der vom ersten Endgerät angebotenen Rufumleitung bestätigt und das Setzen des zweiten Endgerätes als Rufumleitungsziel in der Vermittlungsstelle veranlasst werden. In einer hierzu inversen Ausführung kann durch Senden einer DISCONNECT- bzw. RELEASE-Nachricht durch das zweite Endgerät das Setzen des zweiten Endgerätes als Rufumleitungsziel in der Vermittlungsstelle zurückgewiesen bzw. unterdrückt werden. Entscheidend ist hierbei die konkrete Ausgestaltung der Protokollinhalte in den CONNECT- / DISCONNECT- bzw. RELEASE-Nachrichten. Mit dieser Variante des erfindungsgemässen Verfahrens ist es möglich, nicht nur drohende Rufumleitungs-Ringschlüsse zu verhindern, sondern auch andere Zustände, die einer Rufumleitung auf das angewählte Zielgerät entgegenstehen, wie beispielsweise ein technischer Defekt am Zielgerät oder die physische Nicht-Existenz des Zielgerätes, als Indikator für das Abwehren einer Rufumleitung heranzuziehen. Gemäss einer zweckmäßigen alternativen Ausgestaltung der Erfindung kann der Signalisierungskanal aber auch auf ein Zurücksenden der vom ersten an das zweite Telekommunikationsendgerät gerichteten Nachricht überprüft werden (= Spiegeln der ersten Nachricht). Die ursprüngliche vom ersten an das zweite Endgerät übertragene Nachricht wird also von dem als Rufumleitungsziel gewählten zweiten Endgerät gespiegelt (beispielsweise auf Grund einer dort bereits aktivierten Rufumleitung auf das erste Endgerät) und an das die Umleitung initiierende erste Endgerät zurückgegeben.

Das erfindungsgemäße Verfahren kann vorsehen, dass bei fehlender Detektion einer innerhalb der vorgegebenen Zeitspanne auf dem Signalisierungskanal zurückgesandten Rückantwort durch das erste Telekommunikationsendgerät ein Signal zum Setzen des zweiten Telekommunikationsendgerätes als Rufumleitungsziel an die Vermittlungsstelle abgegeben wird. Dies ist insbesondere in solchen Fällen zweckmäßig, in denen das Spiegeln der Nachricht zur Verfügbarkeitsabfrage vom zweiten Endgerät zurück zum ersten Endgerät als Kriterium für die fehlende Verfügbarkeit des zweiten Endgerätes als Rufumleitungsziel realisiert wird.

Eine sinnvolle Weiterentwicklung des erfindungsgemäßen Verfahrens sieht vor, dass bei erfolgter Detektion einer innerhalb der vorgegebenen Zeitspanne auf dem Signalisierungskanal zurückgesandten Rufaufbaunachricht durch das erste Telekommunikationsendgerät eine zur ersten Rufaufbaunachricht zeitversetzte zweite Rufaufbaunachricht an das zweite Telekommunikationsendgerät gesendet wird.

Gemäss einer speziellen Ausprägung der Erfindung wird bei erfolgter Detektion einer innerhalb der vorgegebenen Zeitspanne auf dem Signalisierungskanal zurückgesandten Rufaufbaunachricht durch das erste Telekommunikationsendgerät der Aufbau einer Rufumleitung abgebrochen und eine Fehlermeldung an den Bediener des ersten Telekommunikationsendgerätes ausgegeben.

Es hat sich in diesem Zusammenhang als sinnvoll erwiesen, wenn dem Bediener des ersten Telekommunikationsendgerätes ein alternatives Rufumleitungsziel angeboten wird.

Die Erfindung beschränkt sich selbstverständlich nicht auf eine Anwendung aussschließlich mit zwei Endgeräten sondern erstreckt sich vielmehr auf eine Anwendung innerhalb beliebiger langer Rufumleitungsketten von n Geräten (n>1).

Der Erfindungsgedanke wird in nachfolgenden Figuren verdeutlicht. Es zeigen:
- **Figur 1**: Ablaufdiagramm des erfindungsgemäßen Verfahrens bei Rücksendung einer CONNECT-Nachricht
- **Figur 2**: Ablaufdiagramm des erfindungsgemäßen Verfahrens bei Spiegelung der Setup-Nachricht
- **Figur 3**: Ablaufdiagramm des erfindungsgemäßen Verfahrens bei Timeout

Im Bahnbetrieb benutzen Fahrdienstleiter für die Kommunikation mit Zügen, Triebfahrzeugen, Wagen bzw. mobilem Personal ortsfeste Fernsprecher, die im GSM-R-Netz betrieben werden. Hiermit werden beispielsweise dienstliche Gespräche für Anweisungen oder Notdurchsagen zur Gefahrvermeidung bzw. -erkennung sein. In Schwachlastzeiten sind in den betrieblichen Steuerzentralen verschiedene Fahrdienstleiter-Arbeitsplätze nicht besetzt. An diese Arbeitsplätze bzw. Teilnehmer gerichtete Anrufe müssen deshalb jeweils einem Vertreter zugestellt werden. Dies wird durch eine Rufumleitung vom unbesetzten Platz auf einen besetzten Platz erreicht. Da bei der Ausführung der Rufumleitung das Rufumleitungsziel ebenfalls umgeleitet sein kann (z.B. während einer Arbeitspause an dem als Rufumleitungsziel ausgewählten Arbeitsplatz) muss vermieden werden, dass das Rufumleitungsziel auf den unbesetzten Arbeitsplatz direkt (oder über Ketten) indirekt umgeleitet wurde. Damit soll verhindert werden, dass Rufe in Leere laufen bzw. nicht bearbeitet werden können.

Einem ersten Arbeitsplatz ist ein erstes Telekommunikationsendgerät (1) und einem zweiten Arbeitsplatz ist ein zweites Telekommunikationsendgerät (2) zugeordnet. Im Falle eines vom ersten zum zweiten Arbeitsplatz umzuleitenden Rufes sendet dieses erste Telekommunikationsendgerät (1) eine SETUP-Nachricht (3) in Richtung des zweiten Telekommunikationsendgerätes (2).

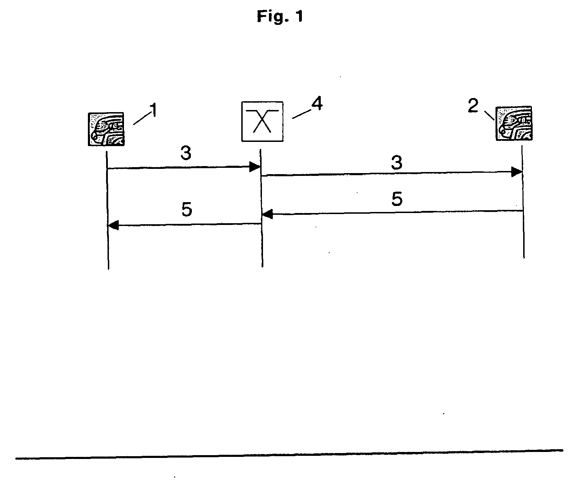

Gemäss der in Figur 1 dargestellten Ausführungsform wird diese Nachricht durch die Vermittlungsanlage (4) weiter in Richtung des zweiten Endgerätes transportiert. Hat das zweite Telekommunikationsendgerät keine Rufumleitung in der Vermittlungseinheit eingerichtet, so wird die SETUP-Nachricht am zweiten Telekommunikationsendgerät empfangen. Hieraus können sich verschiedene Reaktionen ergeben. Das zweite Telekommunikationsendgerät wertet die SETUP-Nachricht aus und erkennt anhand eines veränderten Protokollelementes den Informationsgehalt einer Überprüfung auf einen eventuell bestehenden Rufumleitungsringschluss. In einer ersten Variante nimmt das zweite Endgerät den Rufwunsch beispielsweise mittels einer CONNECT-Nachricht (5) an und signalisiert damit dem ersten Endgerät die Bereitschaft eines möglichen Rufumleitungsziels.

In einer zweiten Variante kann das zweite Endgerät die vom ersten Endgerät ausgesandte SETUP-Nachricht mit einer RELEASE-Nachricht bzw. DISCONNECT-Nachricht beantworten und damit beispielsweise eine Ablehnung als Rufumleitungsziel signalisieren. Die RELEASE- bzw. DISCONNECT-Nachrichten werden von der Vermittlungsanlage transparent zum ersten Endgerät übermittelt.

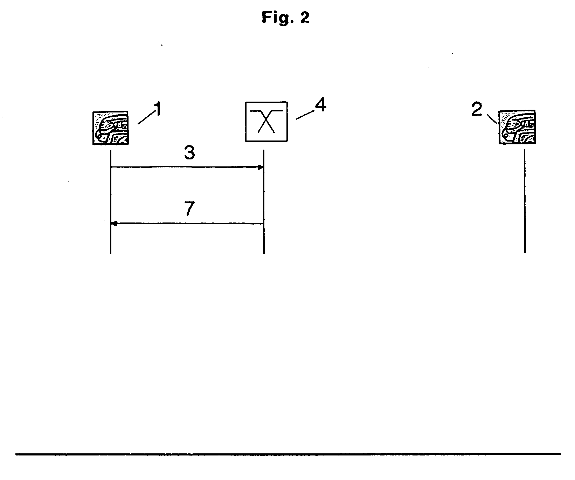

Sollte gemäss der in Figur 2 dargestellten Ausführungsvariante des erfindungsgemässen Verfahrens das zweite Telekommunikationsendgerät eine direkte oder - bei einer Verkettung mehrerer Endgeräte, die jeweils eine Rufumleitung aktiviert haben - auch indirekte Rufumleitung auf das erste Telekommunikationsendgerät aktiviert haben, so wird in der Vermittlungsanlage (4) die ursprüngliche SETUP-Nachricht (3) wieder zum ersten Gerät gespiegelt. Das erste Telekommunikationsendgerät erkennt dies und unterbindet ebenfalls die Rufumleitung auf das zweite Telekommunikationsendgerät.

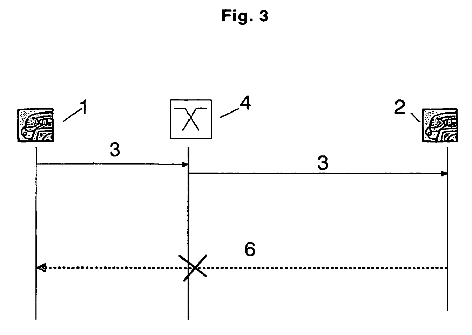

Es ist aber auch eine in Figur 3 dargestellte Situation denkbar, wonach - bedingt durch einen Defekt oder durch ein inaktives zweites Telekommunikationsendgerät - keine Rückmeldung vom zweiten Endgerät erfolgt. In diesem Fall gibt es nach einem definierten Zeitablauf (TIMEOUT) (6) eine Reaktion vom Netz (z.B. DISCONNECT mit best. cause value "no user responding"). In diesem Fall kann das erste Telekommunikationsendgerät ebenfalls aufgrund fehlender Rückmeldung die Rufumleitung auf das nicht reagierende zweite Endgerät unterbinden.

### Bezugszeichenliste:

- 1: erstes Telekommunikationsendgerät
- 2: zweites Telekommunikationsendgerät
- 3: SETUP-Nachricht
- 4: Vermittlungsanlage
- 5: CONNECT-Nachricht
- 6: TIMEOUT-Signal
- 7: gespiegelte SETUP-Nachricht (3)

## Patentansprüche

1. Verfahren zur Umleitung eines für ein erstes Telekommunikationsendgerät eingehenden Rufes an ein zweites Telekommunikationsendgerät, welches über eine Vermittlungsstelle mit dem ersten Telekommunikationsendgerät verbindbar ist, wobei beim Aktivieren der Rufumleitungsfunktionalität am ersten Telekommunikationsendgerät eine Nachricht zur Überprüfung der Verfügbarkeit des als Umleitungsziel identifizierten zweiten Telekommunikationsendgerätes von diesem ersten Telekommunikationsendgerät ausgesendet wird,
**dadurch gekennzeichnet, dass**
▪ die Nachricht zur Überprüfung der Verfügbarkeit direkt an das zweite Telekommunikationsendgerät gesendet wird, sowie
▪ der zur Übertragung der Nachricht vom ersten zum zweiten Telekommunikationsendgerät genutzte Signalisierungskanal vom ersten Telekommunikationsendgerät auf eine innerhalb einer vorwählbaren Zeitspanne vom zweiten Telekommunikationsendgerät generierte Rückantwort überprüft wird.

2. Verfahren zur Umleitung eines für ein erstes Telekommunikationsendgerät eingehenden Rufes an ein zweites Telekommunikationsendgerät nach Anspruch 1, **dadurch gekennzeichnet, dass** vom ersten Telekommunikationsendgerät eine Rufaufbaunachricht zur Überprüfung der Verfügbarkeit an das als Umleitungsziel identifizierte zweite Telekommunikationsendgerät gesendet wird.

3. Verfahren zur Umleitung eines für ein erstes Telekommunikationsendgerät eingehenden Rufes an ein zweites Telekommunikationsendgerät nach Anspruch 1 oder 2, **dadurch gekennzeichnet, dass** der Signalisierungskanal vom ersten Telekommunikationsendgerät auf ein Zurücksenden der vom ersten an das zweite Telekommunikationsendgerät gerichteten Nachricht überprüft wird.

4. Verfahren zur Umleitung eines für ein erstes Telekommunikationsendgerät eingehenden Rufes an ein zweites Telekommunikationsendgerät nach einem der Ansprüche 1 bis 3, **dadurch gekennzeichnet, dass** bei fehlender Detektion einer innerhalb der vorgegebenen Zeitspanne auf dem Signalisierungskanal zurückgesandten Rückantwort durch das erste Telekommunikationsendgerät ein Signal zum Setzen des zweiten Telekommunikationsendgerätes als Rufumleitungsziel an die Vermittlungsstelle abgegeben wird.

5. Verfahren zur Umleitung eines für ein erstes Telekommunikationsendgerät eingehenden Rufes an ein zweites Telekommunikationsendgerät nach einem der Ansprüche 1 bis 4, **dadurch gekennzeichnet, dass** bei erfolgter Detektion einer innerhalb der vorgegebenen Zeitspanne auf dem Signalisierungskanal zurückgesandten Nachricht durch das erste Telekommunikationsendgerät eine zur ersten Rufaufbaunachricht zeitversetzte zweite Nachricht an das zweite Telekommunikationsendgerät gesendet wird.

6. Verfahren zur Umleitung eines für ein erstes Telekommunikationsendgerät eingehenden Rufes an ein zweites Telekommunikationsendgerät nach einem der Ansprüche 1 bis 4, **dadurch gekennzeichnet, dass** bei erfolgter Detektion einer innerhalb der vorgegebenen Zeitspanne auf dem Signalisierungskanal zurückgesandten Nachricht durch das erste Telekommunikationsendgerät der Aufbau einer Rufumleitung abgebrochen und eine Fehlermeldung an den Bediener des ersten Telekommunikationsendgerätes ausgegeben wird.

7. Verfahren zur Umleitung eines für ein erstes Telekommunikationsendgerät eingehenden Rufes an ein zweites Telekommunikationsendgerät nach Anspruch 6, **dadurch gekennzeichnet, dass** dem Bediener des ersten Telekommunikationsendgerätes ein alternatives Rufumleitungsziel angeboten wird.

8. Verfahren zur Umleitung eines für ein erstes Telekommunikationsendgerät eingehenden Rufes an ein zweites Telekommunikationsendgerät nach einem der Ansprüche 1 bis 7, **dadurch gekennzeichnet, dass** das Verfahren in einer Rufumleitungskette mit n Geräten (n>1) durchgeführt wird.

## Claims

1. A method for forwarding an incoming call for a first telecommunication terminal to a second telecommunication terminal that can be connected to the first telecommunication terminal via a switching center, wherein the first telecommunication terminal transmits a message for checking the availability of the second telecommunication terminal, which was identified as forwarding destination, when the call forwarding function is activated on the first telecommunication terminal,
**characterized in that**
• the message for checking the availability is directly transmitted to the second telecommunication terminal, and
• the first telecommunication terminal checks the signaling channel used for transmitting the message from the first to the second telecommunication terminal for a reply generated by the second telecommunication terminal within a predefinable time period.

2. The method for forwarding an incoming call for a first telecommunication terminal to a second telecommunication terminal according to claim 1, **characterized in that** the first telecommunication terminal transmits a call set-up message to the second communication terminal, which was identified as forwarding destination, in order to check the availability.

3. The method for forwarding an incoming call for a first telecommunication terminal to a second telecommunication terminal according to claim 1 or 2, **characterized in that** the first telecommunication terminal checks the signaling channel for the return of the message sent from the first to the second telecommunication terminal.

4. The method for forwarding an incoming call for a first telecommunication terminal to a second telecommunication terminal according to one of claims 1-3, **characterized in that** the first telecommunication terminal transmits a signal for setting the second telecommunication terminal as forwarding destination to the switching center if it is detected that no reply was received on the signaling channel within the predefined time period.

5. The method for forwarding an incoming call for a first telecommunication terminal to a second telecommunication terminal according to one of claims 1-4, **characterized in that** the first telecommunication terminal transmits a second message, which is time-delayed with respect to the first call set-up message, to the second telecommunication terminal if it is detected that a message was received on the signaling channel within the predefined time period.

6. The method for forwarding an incoming call for a first telecommunication terminal to a second telecommunication terminal according to one of claims 1-4, **characterized in that** the first telecommunication terminal interrupts the call forwarding set-up and delivers an error message to the operator of the first telecommunication terminal if it is detected that a message was received on the signaling channel within the predefined time period.

7. The method for forwarding an incoming call for a first telecommunication terminal to a second telecommunication terminal according to claim 6, **characterized in that** an alternative call forwarding destination is offered to the operator of the first telecommunication terminal.

8. The method for forwarding an incoming call for a first telecommunication terminal to a second telecommunication terminal according to one of claims 1-7, **characterized in that** the method is carried out in a call forwarding chain with n devices (n>1).

## Revendications

1. Procédé de transfert d'un appel entrant pour un premier terminal de télécommunication vers un second terminal de télécommunication qui peut être connecté par un point de mise en liaison au premier terminal de télécommunication, dans lequel, lors de l'activation de la fonctionnalité de transfert d'appel sur le premier terminal de télécommunications, un message de contrôle de la disponibilité du second terminal de télécommunications identifié en tant que destination de transfert est envoyé par ce premier terminal de télécommunication,
**caractérisé en ce que**
▪ le message de contrôle de disponibilité est envoyé directement au second terminal de télécommunications, et que
▪ le canal de signalisation utilisé pour le transfert du message du premier au second terminal de télécommunications est contrôlé par le premier terminal de télécommunications pour vérifier la présence d'une réponse générée pendant un laps de temps présélectionnable par le second terminal de télécommunication.

2. Procédé de transfert d'un appel entrant pour un premier terminal de télécommunication à un second terminal de télécommunication selon la revendication 1, **caractérisé en ce qu'**un message d'établissement d'appel est envoyé par le premier terminal de télécommunication pour contrôler la disponibilité au niveau du second terminal de télécommunication identifié comme destination de transfert.

3. Procédé de transfert d'un appel entrant pour un premier terminal de télécommunication à un second terminal de télécommunication selon la revendication 1 ou 2, **caractérisé en ce que** le canal de signalisation est vérifié par le premier terminal de télécommunications pour contrôler le renvoi du message adressé par le premier au second terminal de télécommunication.

4. Procédé de transfert d'un appel entrant pour un premier terminal de télécommunication à un second terminal de télécommunication selon une des revendications 1 à 3, **caractérisé en ce que**, en cas d'absence de détection d'une réponse renvoyée sur le canal de signalisation pendant le laps de temps prédéfini par le premier terminal de télécommunication, un signal de définition du second terminal de télécommunication en tant que destination de transfert d'appel est émis vers le point de mise en liaison.

5. Procédé de transfert d'un appel entrant pour un premier terminal de télécommunication à un second terminal de télécommunication selon une des revendications 1 à 4, **caractérisé en ce que**, en cas de détection effective d'une réponse renvoyée sur le canal de signalisation pendant le laps de temps prédéfini par le premier terminal de télécommunication, un second message décalé chronologiquement par rapport au premier message d'établissement d'appel est envoyé par le premier terminal de télécommunication au second terminal de télécommunication.

6. Procédé de transfert d'un appel entrant pour un premier terminal de télécommunication à un second terminal de télécommunication selon une des revendications 1 à 4, **caractérisé en ce que**, repos en cas de détection effective d'une réponse renvoyée sur le canal de signalisation pendant le laps de temps prédéfini par le premier terminal de télécommunication, l'établissement d'un transfert d'appel est interrompu et un message d'erreur est émis vers l'opérateur du premier terminal de télécommunication

7. Procédé de transfert d'un appel entrant pour un premier terminal de télécommunication à un second terminal de télécommunication selon la revendication 6, **caractérisé en ce qu'**une destination de transfert d'appel alternative est proposée à l'opérateur du premier terminal de télécommunication.

8. Procédé de transfert d'un appel entrant pour un premier terminal de télécommunication à un second terminal de télécommunication selon une des revendications 1 à 7, **caractérisé en ce que** le procédé est réalisé dans une chaîne de transfert d'appels comptant n appareils (n>1).
